(19) Europäisches Patentamt
European Patent Office
Office européen des brevets

(11) Veröffentlichungsnummer: **0 328 485**
**A1**

(12) **EUROPÄISCHE PATENTANMELDUNG**

(21) Anmeldenummer: **89810081.3**

(22) Anmeldetag: **31.01.89**

(51) Int. Cl.⁴: **C 09 B 67/42**
C 09 B 67/38, D 06 L 3/12,
D 06 M 13/34, D 06 P 1/649

(30) Priorität: **08.02.88 CH 439/88 25.11.88 CH 4385/88**

(43) Veröffentlichungstag der Anmeldung:
**16.08.89 Patentblatt 89/33**

(84) Benannte Vertragsstaaten:
**BE CH DE ES FR GB IT LI NL**

(71) Anmelder: **CIBA-GEIGY AG**
**Klybeckstrasse 141**
**CH-4002 Basel (CH)**

(72) Erfinder: **Möckel, Reinhart, Dr.**
**Oberdorfstrasse 3**
**D-7860 Schopfheim-Eichen (DE)**

**Putzar, Roland, Dr.**
**In den Reben 69**
**CH-4114 Hofstetten (CH)**

(54) **Schaumarme Zubereitung zur Veredelung von Synthesefasern.**

(57) Stabile und schaumarme Zubereitung zur Veredelung von Synthesefasern enthaltend, bezogen auf (a) + (b) + (c)

(a) 15 bis 84 Gewichtsprozent eines in Wasser schwer- bis unlöslichen Farbstoffes, optischen Aufhellers oder UV-Absorbers,

(b) 15,5 bis 75 Gewichtsprozent eines oder mehrerer Dispergiermittel und

(c) 0,5 bis 10 Gewichtsprozent eines Alkylendiamids.

EP 0 328 485 A1

## Beschreibung

### Schaumarme Zubereitung zur Veredelung von Synthesefasern

Die vorliegende Erfindung betrifft eine schaumarme Zubereitung zur Veredelung von Synthesefasern, insbesondere eine schaumarme Farbstoffzubereitung eines dispersen Farbstoffes.

Die erfindungsgemässe Zubereitung ist dadurch gekennzeichnet, dass sie, bezogen auf (a) + (b) + (c),

a) 15 bis 84 Gewichtsprozent eines in Wasser schwer- bis unlöslichen Farbstoffes, optischen Aufhellers oder UV-Absorbers,

b) 15,5 bis 75 Gewichtsprozent eines oder mehrerer Dispergiermittel und

c) 0,5 bis 10 Gewichtsprozent eines Alkylendiamids enthält.

Zweckmässigerweise enthält die Zubereitung 18 bis 59 Gewichtsprozent der Komponente (a), 40 bis 75 Gewichtsprozent der Komponente (b) und 1 bis 7 Gewichtsprozent der Komponente (c).

Als Farbstoffe können organische oder anorganische Pigmente, Küpenfarbstoffe oder besonders Dispersionsfarbstoffe, sowie andere unlösliche oder schwerlösliche Farbstoffe verwendet werden.

Bei den wasserunlöslichen oder schwerlöslichen optischen Aufhellern handelt es sich um Verbindungen oder Mischungen von Verbindungen z.B. aus der Klasse der Stilbene, Distyryl-benzole, Diphenyl-distyryle, Triazine, Benzoxazole, Bis-benzoxazole, Bis-benzoxazolylthiophene, Bis-benzoxazolylnaphthaline, Pyrene, Cumarine oder Naphthalin-peri-dicarbonsäureimide.

Die UV-Absorber sind zweckmässigerweise in Wasser schwer- bis unlösliche Derivate der Benzophenonreihe, von 2-Hydroxyphenyl-s-triazinen oder vorzugsweise der 2-Phenylbenzotriazolreihe. Besonders bevorzugt sind Benzotriazolverbindungen der Formel

(1) 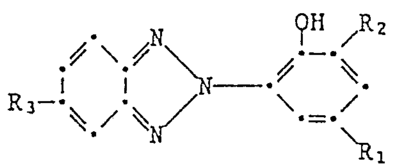

worin $R_1$ Halogen, Hiederalkyl oder Niederalkoxy und $R_2$ und $R_3$, unabhängig voneinander, je Wasserstoff, Halogen, Niederalkyl oder Niederalkoxy bedeuten.

Unter den Benzotriazolverbindungen der Formel (1) sind diejenigen, in denen $R_1$ Niederalkyl wie Methyl oder tert.Butyl, $R_2$ Wasserstoff oder Niederalkyl und $R_3$ Wasserstoff, Chlor oder Methyl bedeuten, bevorzugt.

Im Vordergrund des Interesses stehen 2-(2′-Hydroxy-5′-methylphenyl)-benzotriazol, 2-(2′-Hydroxy-3′,5′-dimethylphenyl)-benzotriazol, 2-(2′-Hydroxy-5-tert.butylphenyl)-benzotriazol, 2-(2′-Hydroxy-3′-tert.butyl-5′-methylphenyl)-5-chlorbenzotriazol, 2-(2′-Hydroxy-3′,5′-di-tert.butylphenyl)-5-chlor-benzotriazol, 2-(2′-Hydroxy-5′-tert.octylphenyl)-benzotriazol, 2-(2′-Hydroxy-3′,5′-di-tert.amylphenyl)-benzotriazol oder 2-(2′-Hydroxy-3′,5′-di-tert.butylphenyl)-benzotriazol.

Als Dispergiermittel kommen z.B. die bekannten anionischen, wie Ligninsulfonate, Kondensationsprodukte von Naphthalinsulfonsäure und/oder Naphthol- oder Naphthylaminsulfonsäuren mit Formaldehyd, Kondensationsprodukte von Phenolsulfonsäuren und/oder Phenolen mit Formaldehyd und Harnstoff in Betracht.

Geeignete Dispergiermittel sind

- Kondensationsprodukte von Naphthalinsulfonsäure und Formaldehyd
- Kondensationsprodukte aus sulfogruppenhaltigen einkernigen Phenolen und Formaldehyd
- Kondensationsprodukte aus zweikernigen nicht kondensierten, mono- oder bifunktionellen Phenolen und Formaldehyd
- Kondensationsprodukte aus sulfogruppenfreien einkernigen Phenolen, Formaldehyd und Sulfit
- Kondensationsprodukte aus Phenolen, Naphtholsulfonsäuren, Natriumsulfit und Formaldehyd, insbesondere aus Kresol, 2-Naphthol-6-sulfonsäure, Natriumsulfit und Formaldehyd.

Als Dispergiermittel besonders geeignet sind auch sulfonierte Kondensationsprodukte, welche durch Umsetzung einer mindestens zwei ersetzbare kernständige Wasserstoffatome aufweisenden aromatischen Verbindung in beliebiger Reihenfolge mit einer Verbindung der Formel

(2) 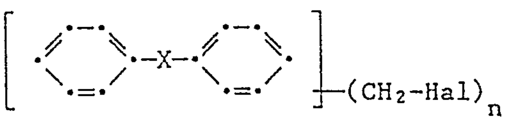

worin X die direkte Bindung oder Sauerstoff,

Hal Chlor oder Brom und
n 1 bis 4 bedeuten
und Sulfonierung erhalten worden sind.

Diese sulfonierten Kondensationsprodukte entsprechen vorzugsweise der Formel

(3) 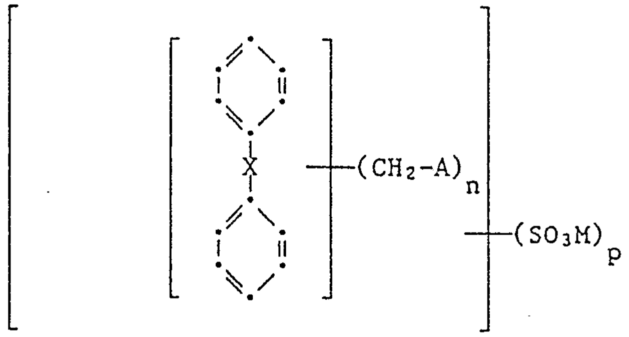

in der X die direkte Bindung oder Sauerstoff, A den Rest einer aromatischen Verbindung, welcher mittels eines Ringkohlenstoffatoms an die Methylengruppe gebunden ist, M Wasserstoff oder ein Kation z.B. Alkalimetall, Erdalkalimetall, Ammoniumgruppe und n und p je eine Zahl von 1 bis 4 bedeuten. Dabei stehen n und p vorzugsweise für 1 oder 2, oder sie können auch je eine beliebige gebrochene Zahl von 1 bis 4 bedeuten z.B. 1,4, 1,8, 2,1 oder 3,2.

Bevorzugte Ausgangsstoffe der Formel (2) sind Chlormethyldiphenyl und Chlormethyldiphenylether. Bei diesen Verbindungen handelt es sich meistens um Isomerengemische mit 1 bis 3 Chlormethylgruppen, wobei sich z.B. die Chlormethylgruppen vorzugsweise in o- und p-Stellung der beiden Benzolringe befinden. Demnach liegen auch die entsprechenden sulfonierten Kondensationsprodukte in der Regel als Gemische vor, insbesondere von mono- bis trisubstituierten Diphenyl-oder Diphenyletherprodukten. Je nach den Ausgangsmaterialien und den gewählten Reaktionsbedingungen bei der Herstellung der Kondensationsprodukte ändert sich das Verhältnis der Isomeren zueinander. Sofern n gleich 1 ist, werden p-Isomere in Anteilen von z.B. 30 bis 90 % und o-Isomere in Anteilen von z.B. 70 bis 10 % erhalten. Sofern n gleich 2 ist, erhält man z.B. p,p′-, o,o′- oder o,p′Verbindungen.

Diese sulfonierten Kondensationsprodukte und deren Herstellung sind in der DE-OS 23 53 691 beschrieben. Weitere Einzelheiten können aus dieser Offenlegungsschrift entnommen werden.

Die Dispergiermittel können in reiner Form, in technischen Gemischen oder in der Mischung verschiedener Komponenten verwendet werden.

Als Beispiel für eine Mischung verschiedener Komponenten sei die vorteilhafte Mitverwendung von 3 bis 30 Gewichtsprozent, bezogen auf die Dispergiermischung, der genannten sulfonierten Kondensationsprodukte der Formel (3) in Mischung mit Ligninsulfonaten und Kondensationsprodukten von Naphthalinsulfonsäure mit Formaldehyd genannt. Dabei beträgt das Gewichtsverhältnis von den Ligninsulfonaten zu den Formaldehyd/Sulfonaphthalin-Kondensationsprodukten zweckmässigerweise 10:1 bis 3:1, vorzugsweise 6:1 bis 4:1.

Als Dispergiermittel können auch sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit vorzugsweise 10 bis 20 Kohlenstoffatomen in der Alkylkette, Alkylbenzolsulfonate mit geradkettiger oder verzweigter Alkylkette und mit vorzugsweise 8 bis 20 Kohlenstoffatomen in der Alkylkette, wie z.B. Nonyl- oder Dodecylbenzolsulfonat, 1,3,5,7-Tetramethyloctylbenzolsulfonat oder Octadecylbenzolsulfonat, sowie Alkylnaphthalinsulfonate oder Sulfobernsteinsäureester, wie z.B. Natriumdihexylsulfosuccinat oder Natriumdioctylsulfosuccinat, in Betracht kommen.

Als Komponente c) kommen insbesondere Alkylendiamide der Formel

(4) R′—CO—NH—Q—NH—CO—R″

in der R′ und R″, unabhängig voneinander, je einen aliphatischen Rest mit 9 bis 23 Kohlenstoffatomen und Q einen Alkylenrest mit 1 bis 8, vorzugsweise 1, 2 oder 3 Kohlenstoffatomen bedeuten, in Betracht.

Komponente c) kann als Einzelverbindung oder in Form eines Gemisches vorhanden sein.

Die aliphatischen Reste R′ und R″ können geradkettig oder verzweigt sein. Sie stellen zusammen mit der CO-Gruppe vorteilhafterweise den Säurerest einer ungesättigten oder vorzugsweise gesättigten aliphatischen Carbonsäure mit 10 bis 24 Kohlenstoffatomen dar. Als aliphatische Carbonsäuren seien beispielsweise Caprin-, Laurin-, Kokosfett-, Myristin-, Palmkernfettsäure, Palmitin-, Talgfett-, Oel-, Ricinolein-, Linol-, Linolen-, Stearin-, Arachin-, Arachidon-, Behen-, Eruca- oder Lignocerinsäure genannt. Behensäure und besonders Stearinsäure sind bevorzugt.

Es können auch Gemische dieser Säuren verwendet werden, wie sie bei der Spaltung von natürlichen Oelen

oder Fetten gewonnen werden. Kokosfettsäure, Palmkernfettsäure, Palmitin-/Stearinsäuregemische, Talgfettsäure und Arachin-/Behensäuregemische sind besonders bevorzugte Gemische.

Vorzugsweise bedeuten R′ und R″ jeweils einen Alkylrest mit 9 bis 23 Kohlenstoffatomen und insbeondere mit 15 bis 21 Kohlenstoffatomen.

Q stellt insbesondere eine Alkylengruppe dar, die 2 bis 5 Kohlenstoffatome enthält und geradkettig oder verzweigt sein kann. Es handelt sich beispielsweise um die -$CH_2CH_2$-, -$CH_2CH_2CH_2$-, 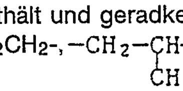 oder

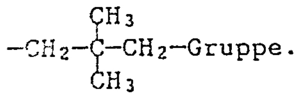

Typische Vertreter für Komponente c) sind Methylen-bis-stearinsäureamid, Ethylen-bis-stearinsäureamid oder Ethylen-bis-behensäureamid.

Die erfindungsgemässe Zubereitung enthält zweckmässigerweise mindestens 1,5 Gewichtsprozent der Komponente c), bezogen auf das Gemisch aus den Komponenten a) + b) + c). Es sind jedoch bevorzugt 2 bis 5 Gewichtsprozent zu verwenden, um eine stabile und deutlich schaumarme Zubereitung zu erreichen.

Je nach verwendeter Komponente (a) kann die erfindungsgemässe Zubereitung zusätzlich zu den Komponenten (a) (b) und (c) Alkalicarbonate, wie z.B. wasserfreies Natrium- oder Kaliumcarbonat, Elektrolyte, wie z.B. Natriumchlorid oder Natriumsulfat, Natriumdithionit, Emulgatoren, Glykole, Blockpolymerisate und weitere Schaumverhütungsmittel, wie z.B. $C_8$-$C_{22}$Fettalkohole, $C_8$-$C_{22}$-Fettsäuren oder deren Salze, oder Polypropylenglykole enthalten. Sie kann bis ca. 25 Gewichtsprozent vorzugsweise jedoch höchstens 15 Gewichtsprozent dieser weiteren Zusätze enthalten. Als Restfeuchte kann die Zubereitung auch bis zu 10 Gewichtsprozent Wasser enthalten.

Bevorzugte Zubereitungen enthalten, jeweils bezogen auf die Zubereitung
20 bis 40 Gewichtsprozent der Komponente (a)
50 bis 70 Gewichtsprozent der Komponente (b) einzeln oder als Gemisch aus zwei oder drei Dispergiermitteln
1 bis 5 Gewichtsprozent der Komponente (c)
3 bis 8 Gewichtsprozent Wasser und
0 bis 15 Gewichtsprozent der weiteren Zusätze.

Die Zubereitung enthält das Alkylendiamid (Komponente c)) zweckmässigerweise in feindispergierter Form. Die Dispergierung des Alkylendiamids erfolgt in bekannter Weise durch Einwirkung von hohen Scherkräften auf die Komponente (a) in Gegenwart der Dispergiermittel, z.B. durch Kneten in Knetern oder durch Mahlen einer wässrigen Suspension in einer Kugel-, Sand- oder Perlmühle. Das erhaltene Knetgut bzw. die erhaltene wässrige Dispersion wird in bekannter Weise getrocknet, z.B. in Trockenschränken oder durch Zerstäubungstrocknung. Eine andere Einsatzmöglichkeit des Alkylendiamids besteht darin, dass man zuerst das Alkylendiamid mit einem Dispergiermittel nassmahlt und die erhaltene wässrige Dispersion tel quel oder nach Sprühtrocknung der flüssigen oder pulverförmigen Zubereitung, die als Komponente (a) besonders einen Farbstoff enthält, zusetzt.

Verwendung findet die erfindungsgemässe Zubereitung je nach der Komponente (a) zum Färben oder optischen Aufhellen von Synthesefasern, insbesondere Polyesterfasern und/oder Cellulosefasern enthaltendem Textilmaterial. Als Polyesterfasermaterial sind z.B. Celluloseesterfasern, wie Cellulose-2 $^1/_2$-acetatfasern und -triacetatfasern und besonders lineare Polyesterfasern zu erwähnen. Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis(hydroxymethyl)-cyclohexan erhalten werden, sowie Mischpolymere aus Terephthal- und Isophthalsäure und Ethylenglykol. Der in der Textilindustrie bisher fast aus schliesslich eingesetzte lineare Polyester besteht aus Terephathalsäure und Ethylenglykol. Das Färbeverfahren bzw. optische Aufhellen wird in üblicher Weise durchgeführt. Die Zubereitung wird in ein vorgeschärftes wässriges Bad langsam unter Rühren eingetragen, wonach die Flotte zum Färben bzw. optischen Aufhellen bereitgestellt ist. UV-Absorber-Dispersionen können auch als Hilfsmittel beim Färben von Synthesefasern, insbesondere Polyesterfasern oder auch sauer modifizierten Polyesterfasern verwendet werden.

Es ist bereits bekannt, Schaumverhütungsmittel den Formulierungen zuzusetzen. Die bisherigen Handelsform-Zusätze zur Schaumregulierung wirken nur teilweise oder lassen sich nicht homogen einarbeiten, was Flecken und Unegalitäten z.B. beim Färben zur Folge hat. Ueberraschenderweise hingegen können Auszieh-Färbungen und Foulardfärbungen unter Verwendung der erfindungsgemässen Zubereitungen schaumarm durchgeführt werden.

In den folgenden Beispielen beziehen sich die angegebenen Prozentsätze, wenn nichts anderes angegeben ist, auf das Gewicht. Teile sind Gewichtsteile.

Beispiel 1

Ein Farbstoffpräparat, das aus 318 Teilen eines Dispersionsfarbstoffes der Formel

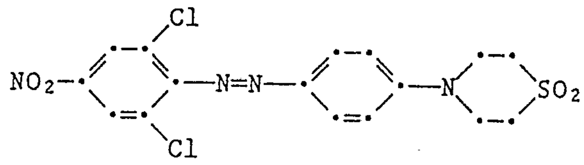

422 Teilen Ligninsulfonat,
100 Teilen eines Kondensates aus Formaldehyd und dem Natriumsalz der Naphthalinsulfonsäure,
100 Teilen der gemäss Beispiel 3 der DE-0S 23 53 691 hergestellten Biphenylmethyl-naphthalinsulfonsäure als Natriumsalz
30 Teilen N,N'-Ethylenbisstearamid und
60 Teilen Wasser als Restfeuchte
zusammengesetzt ist, wird durch Nassmahlung aller Komponenten in einer offenen Kugelmühle bis zu einem mittleren Partikeldurchmesser von 1-2 µm und anschliessende Sprühtrocknung der wässrigen Dispersion erhalten.

0,6 g des Pulvers werden in 250 ml entsalztem Wasser dispergiert. Der Schaumtest an dieser Dispersion nach der Pretema-Jet-Methode zeigt bei 30°, 60° und 120°C keinen Schaum. Stellt man hingegen nach derselben Methode ein Präparat her, das kein N,N'-Ethylenbisstearamid enthält, so liefert der Schaumtest an der Dispersion aus 0,6 g Pulver in 250 ml entsalztem Wasser folgende Ergebnisse:
bei 30°C 100 mm Schaumhöhe
60°C 100 mm Schaumhöhe
120°C 100 mm Schaumhöhe.

Beispiel 2

a) Ein Farbstoffpräparat, das aus
264 Teilen eines Dispersionsfarbstoffes der Formel

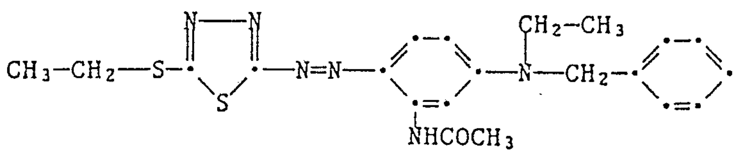

450 Teilen Ligninsulfonat,
100 Teilen eines Kondensates aus Formaldehyd und dem Natriumsalz der Naphthalinsulfonsäure,
120 Teilen der gemäss Beispiel 3 der DE-0S 23 53 691 hergestellten Biphenylmethyl-naphthalinsulfonsäure als Natriumsalz
6 Teilen eines Propylenoxid/Ethylenoxid-Blockpolymerisates Molekulargewicht 3000 und
60 Teilen Wasser als Restfeuchte
zusammengesetzt ist, wird durch Nassmahlung aller Komponenten in einer offenen Kugelmühle bis zu einem mittleren Partikeldurchmesser von 1-2 µm und anschliessende Sprühtrocknung der wässrigen Dispersion erhalten.

b) Dem gemäss (a) hergestellten Pulver werden 37 Teile eines Präparates, das aus
570 Teilen N,N'-Ethylenbisstearamid,
380 Teilen eines Kondensates aus Formaldehyd und dem Natriumsalz der Naphthalinsulfonsäure und
50 Teilen Wasser
besteht und durch Nassmahlung der Komponenten in einer offenen Kugelmühle bis zu einem mittleren Partikeldurchmesser von 1-2 µm und anschliessendes Sprühtrocknen erhalten wird, beigemischt.

0,6 g dieses Pulvers werden in 250 ml entsalztem Wasser dispergiert. Der Schaumtest an dieser Dispersion nach der Pretema-Jet-Methode liefert folgende Ergebnisse
bei 30°C 10 mm Schaumhöhe
60°C 0 mm Schaumhöhe
120°C 0 mm Schaumhöhe.

Dispergiert man 0,6 g des gemäss a) erhaltenen Pulvers, so ergibt der Schaumtest folgende Ergebnisse:
bei 30°C 100 mm Schaumhöhe
60°C 100 mm Schaumhöhe
120°C 50 mm Schaumhöhe.

Beispiel 3

a) Ein Farbstoffpräparat, das aus 510 Teilen eines Dispersionsfarbstoffs der Formel

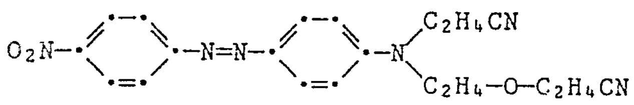

440 Teilen eines Ligninsulfonats,
40 Teilen eines Präparates aus 500 Teilen N,N'-Ethylenbisstearamid, 120 Teilen eines Kondensates aus Formaldehyd und dem Natriumsalz der Naphthalinsulfonsäure, 330 Teilen eines Ligninsulfonates und 50 Teilen Wasser (Restfeuchte),
20 Teileneines Propylenoxid/Ethylenoxid-Blockpolymerisates (Molekulargewicht 3000) und
48 Teilen Wasser (Restfeuchte)
zusammengesetzt ist, wird durch Nassmahlung aller Komponenten in einer offenen Kugelmühle bis zu einem mittleren Partikeldurchmesser von 1-2 µm und anschliessende Sprühtrocknung der wässrigen Dispersion erhalten.

0,6 g dieses Pulvers werden in 250 ml entsalztem Wasser dispergiert. Der Schaumtest an dieser Dispersion nach der Pretema-Jet-Methode liefert folgende Ergebnisse:
bei 30°C 20 mm Schaumhöhe
60°C 10 mm Schaumhöhe
120°C 0 mm Schaumhöhe.

b) Stellt man hingegen nach derselben Methode ein Präparat her, das kein N,N'-Ethylenbisstearamid enthält, so liefert der Schaumtest an der Dispersion aus 0.6 g Pulver in 250 ml entsalztem Wasser folgende Ergebnisse:
bei 30°C 95 mm Schaumhöhe
60°C 100 mm Schaumhöhe
120°C 70 mm Schaumhöhe.

Beispiel 4

In einer Sandmühle werden
40 Teile 2-(2'-Hydroxy-3'-tert.butyl-5'-methylphenyl)-5-chlorbenzotriazol
10 Teile Ammoniumsalz des Schwefelsäureesters des Anlagerungsproduktes von 60 mol Propylenoxid an 1 mol Glycerin
1 Teil eines Oxalkylierungsproduktes mit 25 Ethylenoxideinheiten eines $C_{16}/C_{18}$-Alkohols
3 Teile N',N'-Ethylenbisstearamid und
46 Teile Wasser gemischt.
Alsdann wird die Mischung mit Quarzsand solange gemahlen, bis die Partikelgrösse < 5 µm ist.
Die Dispersion wird vom Mahlsand abgetrennt.
75 Teile der erhaltenen Dispersion werden unter Rühren mit
12,5 Teilen einer 2%-igen wässrigen Lösung eines Biopolymeren auf Polysaccharidbasis und
12,5 Teilen Wasser gemischt und homogenisiert.

Beispiel 5

In einer Sandmühle werden
40 Teile einer Mischung aus
1,2-bis(5-methylbenzoxazol-2-yl)ethylen und 2,4-Dimethoxy-6-(1-pyrenyl)-1 ,3,5-triazin
2 Teile Natrium-dihexylsulfosuccinat
4 Teile eines Polyadditionsproduktes
von 80 % Ethylenoxid und
20 % Propylenoxid; Molekulargewicht ca. 10'000 bis 15'000
4 Teile N',N'-Ethylenbisstearamid
40 Teile Wasser gemischt.
Hierauf wird die Mischung mit Quarzsand solange gemahlen, bis die Partikelgrösse < 3 µm ist.
Die Dispersion wird vom Mahlsand abgetrennt.
50 Teile der erhaltenen Dispersion werden unter Rühren mit
15 Teilen einer 10%-igen Lösung eines Polyvinylalkohols
0,5 Teilen Formaldehyd und
34,5 Teilen Wasser gemischt und homogenisiert.

Anwendungsbeispiel 1

100 Teile der gemäss Beispiel 1 hergestellten Zubereitung werden in 900 Teilen Wasser dispergiert. Mit dieser schaumfreien Flotte klotzt man ein Polyester/Baumwollgewebe mit einer Flottenaufnahme von 70 %, unterwirft das Gewebe anschliessend einer Zwischentrocknung und thermosoliert dann 1 Minute bei 210°C.

Man erhält eine egale gelbe Färbung, die keine Flecken aufweist.

Anwendungsbeispiel 2

100 g eines Polyestergewirkes (Polyethylenglykolterephthalat) werden in einem HT-Zirkulationsapparat bei 60°C in 3 Liter Wasser eingebracht, welches
9 g Ammoniumsulfat
18 g Dinatriumsalz von Di-(6-sulphonaphthyl-2-)methan
5 g eines fein dispergierten Farbstoffes der Formel

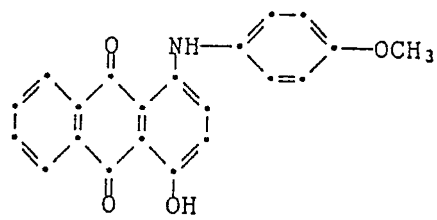

3 g der gemäss Beispiel 4 hergestellten UV-Absorberformulierung
enthält und mit 85 %iger Ameisensäure auf pH 5 eingestellt ist. Man erhitzt das Färbebad, bei ständig zirkulierender Flotte, innerhalb von 30 Minuten auf 130°C und färbt 1 Stunde bei dieser Temperatur. Alsdann wird das Färbebad abgekühlt und das Substrat gespült und wie üblich zur Entfernung von nichtfixiertem Farbstoff reduktiv gereinigt. Anschliessend wird das Substrat neutralisiert, nochmals gespült und getrocknet. Bedingt durch die stabile mitverwendete UV-Absorberformulierung wird während des Färbeprozesses weder ein Anstieg des Differenzdruckes festgestellt noch zeigen sich Ablagerungen im Inneren des Wickelkörpers. Man erhält somit eine gleichmässige lichtechte marineblaue Färbung.

**Patentansprüche**

1. Zubereitung zur Veredelung von Synthesefasern, dadurch gekennzeichnet, dass sie, bezogen auf (a) + (b) + (c)
(a) 15 bis 84 Gewichtsprozent eines in Wasser schwer- bis unlöslichen Farbstoffes, optischen Aufhellers oder UV-Absorbers,
(b) 15,5 bis 75 Gewichtsprozent eines oder mehrerer Dispergiermittel und
(c) 0,5 bis 10 Gewichtsprozent eines Alkylendiamids enthält.

2. Zubereitung gemäss Anspruch 1, dadurch gekennzeichnet, dass der Farbstoff ein Dispersionsfarbstoff ist.

3. Zubereitung gemäss Anspruch 1, dadurch gekennzeichnet, dass der optische Aufheller aus der Klasse der Stilbene, Distyryl-benzole, Diphenyldistyryle, Triazine, Benzoxazole, Bis-benzoxazole, Bis-benzoxazolylthiophene, Bis-benzoxazolylnaphthaline, Pyrene, Cumarine und Naphthalin-peri-dicarbonsäureimide entstammt.

4. Zubereitung gemäss Anspruch 1, dadurch gekennzeichnet, dass der UV-Absorber ein in Wasser schwer- bis unlösliches Derivat der Benzophenonreihe, von 2-Hydroxyphenyl-s-triazinen oder der 2-Phenylbenzotriazolreihe ist.

5. Zubereitung gemäss Anspruch 4, dadurch gekennzeichnet, dass der UV-Absorber der Formel

(1) 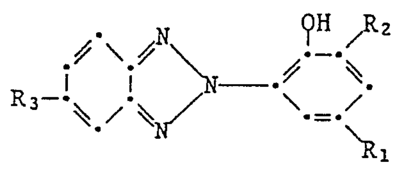

entspricht, worin $R_1$ Halogen, Niederalkyl oder Niederalkoxy und $R_2$ und $R_3$, unabhängig voneinander, je Wasserstoff, Halogen, Hiederalkyl oder Niederalkoxy bedeuten.

6. Zubereitung gemäss einem der Ansprüche 1 bis 5, dadurch gekennzeichnet, dass sie als Dispergiermittel (b) Ligninsulfonate, Kondensationsprodukte von Naphthalinsulfonsäure oder Naphtholsulfonsäure oder Naphthylaminsulfonsäure mit Formaldehyd oder Kondensationsprodukte aus Phenolsulfonsäure oder Phenolen mit Formaldehyd und Harnstoffe enthält.

7. Zubereitung gemäss Anspruch 6, dadurch gekennzeichnet, dass das Dispergiermittel ein sulfoniertes Kondensationsprodukt, welches durch Umsetzung einer mindestens zwei ersetzbare kernständige Wasserstoffatome aufweisenden aromatischen Verbindung in beliebiger Reihenfolge mit einer Verbindung der Formel

(2) 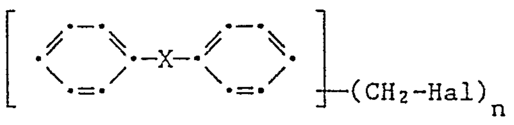

worin X die direkte Bindung oder Sauerstoff,
Hal Chlor oder Brom und
n 1 bis 4 bedeuten
und Sulfonierung erhalten worden ist.

8. Zubereitung gemäss Anspruch 7, dadurch gekennzeichnet, dass das sulfonierte Kondensationsprodukt durch Verwendung eines ein- oder mehrkernigen aromatischen Kohlenwasserstoffes, der gegebenenfalls mit Hydroxyl, Alkylgruppen mit 1 bis 4 Kohlenstoffatomen, Alkoxygruppen mit 1 bis 4 Kohlenstoffatomen oder Halogen substituiert ist, und mindestens zwei ersetzbare kernständige Wasserstoffatome aufweist, erhalten worden ist.

9. Zubereitung gemäss Anspruch 8, dadurch gekennzeichnet, dass das sulfonierte Kondensationsprodukt durch Verwendung einer Naphthalinverbindung, die gegebenenfalls mit Hydroxyl, Chlor oder Methyl substituiert ist und mindestens zwei ersetzbare, kernständige Wasserstoffatome aufweist, erhalten worden ist.

10. Zubereitung gemäss einem der Ansprüche 1 bis 5, dadurch gekennzeichnet, dass das Dispergiermittel eine Mischung aus Ligninsulfonaten, Kondensationsprodukten aus Naphthalinsulfonsäure und Formaldehyd und einem sulfonierten Kondensationsprodukt gemäss Anspruch 7 ist.

11. Zubereitung gemäss einem der Ansprüche 1 bis 5, dadurch gekennzeichnet, dass sie als Dispergiermittel sulfatierte oder phosphatierte Alkylenoxidaddukte an mehrwertige, 2 bis 6 Kohlenstoffatome aufweisende aliphatische Alkohole oder an mindestens zwei Aminogruppen oder eine Aminogruppe und eine Hydroxylgruppe aufweisende Amine mit 2 bis 9 Kohlenstoffatomen enthält.

12. Zubereitung gemäss einem der Ansprüche 1 bis 5, dadurch gekennzeichnet, dass sie als Dispergiermittel Alkylsulfonate, Alkylnaphthalinsulfonate oder Sulfobernsteinsäureester enthält.

13. Zubereitung gemäss einem der Ansprüche 1 bis 12, dadurch gekennzeichnet, dass die Komponente (c) ein Alkylendiamid der Formel

$R'-CO-NH-Q-NH-CO-R''$

ist, in der
R′ und R″, unabhängig voneinander, je einen aliphatischen Rest mit 9 bis 23 Kohlenstoffatomen und Q einen Alkylenrest mit 1 bis 8 Kohlenstoffatomen bedeuten.

14. Verfahren zur Herstellung der Zubereitung gemäss Anspruch 1, dadurch gekennzeichnet, dass man den Farbstoff, den optischen Aufheller oder den UV-Absorber der Komponente (a), das Dispergiermittel (b) und das Alkylendiamid (c) in Form einer wässrigen Suspension mahlt und die erhaltene wässrige Dispersion trocknet.

15. Verwendung der Zubereitung gemäss einem der Ansprüche 1 bis 13 zum Färben bzw. optischen Aufhellen von Synthesefasern, besonders Polyesterfasern enthaltendem Textilmaterial.

Europäisches Patentamt

# EUROPÄISCHER RECHERCHENBERICHT

Nummer der Anmeldung

EP 89 81 0081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-E- 31 190 (SOC. IND. CHIMIQUES BALE)<br>* Seite 1, Zeilen 8-18 *<br>--- | 1,3,6-15 | C 09 B 67/42<br>C 09 B 67/38<br>D 06 L 3/12<br>D 06 M 13/34<br>D 06 P 1/649 |
| Y | CH-A- 638 239 (CIBA-GEIGY)<br>* Seite 2, rechte Spalte, Zeilen 55-64; Seite 3, rechte Spalte, Zeile 56 - Seite 4, linke Spalte, Zeile 54 *<br>--- | 1,3,6-15 | |
| Y | FR-A-2 205 506 (CIBA-GEIGY)<br>* Seite 1, Zeilen 6-17; Seite 6, Zeilen 25-39 * & DE-A-2 353 691 (Kat. D)<br>--- | 1,2,6-15 | |
| A | DE-A-2 443 063 (CIBA-GEIGY)<br>* Seite 2, Zeile 13 - Seite 3, Zeile 7 *<br>--- | 1 | |
| A | EP-A-0 207 002 (CIBA-GEIGY)<br>* Zusammenfassung; Seite 9, Zeilen 12-16; Seite 11, Zeilen 15-16 *<br>--- | 1 | **RECHERCHIERTE SACHGEBIETE (Int. Cl.4)** |
| A | GB-A-2 155 004 (SANDOZ)<br>* Seite 1, Zeilen 15-34; Seite 3, Zeile 57 *<br>--- | 1 | C 09 B<br>D 06 P<br>D 06 L<br>D 06 M |
| A | GB-A- 355 726 (BRITISH CELANESE)<br>* Seite 1, Zeilen 39-60; Seite 2, Zeilen 105-115 *<br>--- | 1 | |
| A | EP-A-0 056 160 (BAYER)<br>* Zusammenfassung *<br>--- -/- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 03-05-1989 | DAUKSCH H.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 89 81 0081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | JOURNAL OF APPLIED POLYMER SCIENCE, Band 33, Nr. 6, 5. Mai 1987, Seiten 2087-2095, John Wiley & Sons, Inc., New York, US; C.M. CARR et al.: "Photoprotective agents for wool. Synergism between UV absorbers and antioxidants" * Seiten 2087-2088 * --- | 1,4 | |
| A | US-A-3 231 508 (H.Y. LEW) * Spalte 1, Zeilen 23-53 * ----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 03-05-1989 | DAUKSCH H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)